# EUROPÄISCHE PATENTSCHRIFT

(11) **EP 3 464 980 B1**
(45) Veröffentlichungstag und Bekanntmachung des Hinweises auf die Patenterteilung: **05.05.2021**
(21) Anmeldenummer: 17722456.5
(22) Anmeldetag: 10.05.2017
(51) Int. Cl.: F16L 33/08

(54) **SCHLAUCHSCHELLE**
HOSE CLAMP
COLLIER DE SERRAGE DE FLEXIBLE

(30) Priorität: 24.05.2016 DE 102016109548
(43) Veröffentlichungstag der Anmeldung: 10.04.2019
(73) Patentinhaber: NORMA Germany GmbH, 63477 Maintal (DE)
(72) Erfinder: HENRICH, Detlef, 63694 Limeshain (DE); LANGE, Frank, 63654 Büdingen (DE); LEUSNER, Oliver, 65232 Taunusstein (DE); BENNAI, Yassine, 91270 Vigneux sur Seine (FR); KRAUSS, Mathias, 61130 Nidderau (DE); MÖLLER, Björn, 61130 Nidderau (DE)
(74) Vertreter: Patentanwälte Olbricht Buchhold Keulertz
(86) Internationale Anmeldenummer: PCT/EP2017/061144
(87) Internationale Veröffentlichungsnummer: WO 2017/202609

(56) Entgegenhaltungen:
- EP-A2- 1 912 008
- EP-A2- 1 939 513
- DE-A1-102006 057 497
- DE-U1-202011 005 396
- FR-A1- 2 887 321

## Beschreibung

Die vorliegende Erfindung betrifft eine Schlauchschelle mit einem Schellenband und mit einer Spanneinrichtung zum Spannen des Schellenbandes, wobei ein erstes Clipelement am Schellenband angeordnet ist, mit dem die Schlauchschelle an einem Schlauch in einem axial definierten Abstand zu einem Schlauchende fixierbar ist.

### STAND DER TECHNIK

Die DE 10 2006 057 497 A1 offenbart eine Schlauchschelle mit einem Schellenband und mit einer Spanneinrichtung zum Spannen des Schellenbandes, wobei drei Clipelemente gleichmäßig über den Umfang verteilt am Schellenband angeordnet sind. Mit den Clipelementen ist die Schlauchschelle konzentrisch zum Schlauch in einem axial definierten Abstand zu einem Schlauchende fixierbar. Befindet sich die Schlauchschelle am Schlauch, so ist vollumfänglich ein konstanter Abstand zwischen der Außenoberfläche des Schlauches und dem Schellenband eingestellt. Wird die Spanneinrichtung betätigt und somit das Schellenband gespannt, kann das Schellenband aus den Clipelementen nacheinander herausgelöst werden. Dadurch befindet sich das Schellenband anschließend nicht mehr in haltender Verbindung mit den Clipelementen. Die Clipelemente können allerdings beispielsweise durch ein Vercrimpen mit dem Schlauchende funktionslos an diesem verbleiben.

Beim Herauslösen des Schellenbandes aus den drei Clipelementen ist es dem Zufall überlassen, in welcher Reihenfolge das Schellenband aus den Clipelementen auslösen kann. Dadurch kann eine Wanderung der Spanneinrichtung in Umfangsrichtung die Folge sein, insbesondere dann, wenn das Ende des Schellenbandes in die Spanneinrichtung hineingezogen wird. Ein weiterer Nachteil entsteht dadurch, dass durch die definierte Geometrie der Clipelemente der voreingestellte Durchmesser der Schlauchschelle mit dem Durchmesser des Schlauches korrespondieren muss. Eine Ausgleichsmöglichkeit beispielsweise durch eine einseitige Ausbauchung des Schellenbandes besteht nur bedingt. Ein weiterer Nachteil entsteht dadurch, dass bei einer festgezogenen Schlauchschelle die Clipelemente nicht mehr in Kontakt mit dem Schellenband stehen und die Clipelemente sich durch die eher schwach haltende Crimpverbindung mit dem Schlauchende über eine längere Gebrauchsdauer lösen können Aus dem Dokument FR 2 887 321 A1 ist ein gattungsbildendes Schellenband bekannt.

### OFFENBARUNG DER ERFINDUNG

Aufgabe der Erfindung ist die Bereitstellung einer Schlauchschelle mit einer verbesserten Positionierung an einem Schlauch. Insbesondere besteht die Aufgabe darin, mit möglichst geringem Aufwand eine variable und den Ausgleich von Durchmessern schaffende Vorpositionierung der Schlauchschelle am Schlauch zu ermöglichen. Dabei soll insbesondere das Clipelement nach dem Auslösen des Schellenbandes sicher am Schlauch gehalten werden können.

Diese Aufgabe wird ausgehend von einer Schlauchschelle gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass zusätzlich zum ersten Clipelement zumindest ein zweites Clipelement am Schellenband angeordnet ist, das das Schellenband in einem radialen Abstand zur Außenoberfläche des Schlauches positioniert.

Die Erfindung macht sich dabei die Möglichkeit zunutze, zumindest zwei Clipelemente zur Vorfixierung des Schellenbandes am Schlauch zu verwenden, wobei ein erstes

Clipelement das Schellenband insbesondere unmittelbar in Kontakt mit der Schlauchoberfläche des Schlauches bringt, während das zweite Clipelement mit einer radialen Beabstandung so ausgebildet ist, dass das Schellenband im Bereich des zweiten Clipelementes eine Art Ausbauchung über der Außenoberfläche des Schlauches bildet. Dadurch wird erreicht, dass verschiedene voreingestellte Durchmesser der Schlauchschelle durch das zweite Clipelement ausgeglichen werden können. Ein drittes Clipelement ist nicht in jedem Fall erforderlich, kann aber optional vorgesehen werden. Das erste Clipelement dient dabei insbesondere zur Fixierung des axialen Abstandes des Schellenbandes zum Schlauchende und das zweite Clipelement dient ebenfalls zur axialen Fixierung aber auch zur Festlegung eines radialen Abstandes des Schellenbandes zur Außenoberfläche des Schlauches. Somit ist die Schlauchschelle in Umfangsrichtung und in axialer Richtung definiert am Schlauchende vorpositioniert. Ein Verkippen der Schlauchschelle wird dabei effektiv verhindert.

Eine vorteilhafte Anordnung bei der Verwendung von genau zwei Clipelemente sieht vor, dass das zweite Clipelement auf dem Schellenband dem erstem Clipelement etwa diametral gegenüberliegend angeordnet ist. Aus einer diametral gegenüberliegenden Anordnung der zwei Clipelemente ergibt sich eine kippsichere Vorfixierung der Schlauchschelle am Schlauch. Bei drei Clipelementen ist in der Regel eine gleichmäßige Verteilung über den Umfang der Schlauchschelle vorteilhaft.

Das erste Clipelement ist dabei insbesondere so ausgebildet, dass das Schellenband im Bereich des ersten Clipelementes dicht angrenzend oder anliegend an der Außenoberfläche des Schlauches verläuft. Durch das gegenüberliegend zum ersten Clipelement angeordnete zweite Clipelement ergibt sich vor dem Spannen des Schellenbandes ein Abstand zwischen dem Schellenband und der Außenoberfläche des Schlauches. Somit entsteht zwischen dem Schellenband und dem Schlauchquerschnitt eine sichelförmige Öffnung, die im Bereich des zweiten Clipelementes eine maximale Öffnungsweite aufweist.

Erfindungsgemäß weist das zweite Clipelement einen Rastabschnitt auf, in den das Schellenband vor dem Spannen der Spanneinrichtung eingerastet ist und aus dem das Schellenband beim Spannen der Spanneinrichtung automatisch herauslösbar ist. Dadurch wird der Vorteil erreicht, dass das Clipelement sich nicht plastisch verformen muss. Ferner kann das Schellenband den Abstand zwischen dem Schellenband und der Außenoberfläche des Schlauches während des Spannens der Spanneinrichtung überbrücken. Hierfür sieht die Verbindung zwischen dem Schellenband und dem Clipelement vor, dass bei Erreichen einer gewissen Spannkraft das Schellenband aus dem Rastabschnitt herausgelöst wird, sodass sich das Schellenband vollumfänglich an die Außenoberfläche des Schlauches anlegen kann, ohne eine plastische Verformung des Clipelementes hervorzurufen.

Erfindungsgemäß ist das zweite Clipelement aus einem einteiligen und mehrfach gebogenen Blechelement gebildet, wobei das Blechelement einen Endabschnitt aufweist, der so ausgebildet ist, dass dieser nach dem Spannen der Spanneinrichtung zwischen Schellenband und Schlauch gehalten wird. Der Endabschnitt erstreckt sich dabei derart zum Rastabschnitt, dass sich das Schellenband aus dem Rastabschnitt löst, wenn die Spanneinrichtung gespannt wird, wobei das Schellenband gegen den Endabschnitt zur Anlage gelangt und den Endabschnitt beim endgültigen Spannen der Spanneinrichtung zwischen dem Schellenband und der Außenoberfläche des Schlauches einklemmt. In Folge dessen wird das Clipelement zusätzlich zur Vercrimpung am Schlauchende vom Schellenband fixiert, sodass das Clipelement zwar außer Funktion gerät, jedoch verliersicher am Schlauchende gehalten wird. Insbesondere wird dieser Vorteil erreicht, indem der Endabschnitt mit dem Rastabschnitt eine Überdeckung aufweist.

Gemäß einer weiteren vorteilhaften Ausgestaltung des zweiten Clipelementes ist zwischen dem Rastabschnitt und dem Endabschnitt ein Abstandsabschnitt ausbildet. Der Endabschnitt liegt dabei bereits im vorfixierten Zustand der Schlauchschelle an der Außenoberfläche des Schlauches an. Der Abstandsabschnitt sorgt dann dafür, dass der Rastabschnitt den gewünschten Abstand zur Außenoberfläche des Schlauches einnimmt. Befindet sich das Schellenband eingerastet im Rastabschnitt, so behält schließlich das Schellenband im Bereich des zweiten Clipelementes den gewünschten Abstand zur Außenoberfläche des Schlauches.

Insbesondere ist das Clipelement so ausgebildet, dass der Rastabschnitt, der Endabschnitt und der Abstandsabschnitt einen U-förmigen Teil des Blechelementes bilden, wobei der Rastabschnitt und der Endabschnitt Schenkel der U-Form bilden und etwa parallel zueinander verlaufen, wobei der Abstandsabschnitt einen Grundabschnitt der U-Form bildet und senkrecht zum Rastabschnitt und zum Endabschnitt verläuft.

In einer bevorzugten Ausgestaltung wird der Rastabschnitt von insbesondere zwei Einbuchtungen begrenzt, wobei Ränder des Schellenbands zwischen den Einbuchtungen und einem Boden des Rastabschnitts rastend aufnehmbar sind. Das Schellenband kann dabei vor dem Spannen der Schlauchschelle unter leichter Vorspannung zwischen dem Boden und den Einbuchtungen des Rastabschnitts gehalten werden und insbesondere am Boden anliegen. Dadurch ergibt sich eine kraftschlüssige Fixierung des Clipelements am Schellenband auch in Umfangsrichtung.

Die Einbuchtungen können sich dabei über die gesamte Breite des Clipelements erstrecken. In einer bevorzugten Ausgestaltung, die insbesondere für kleinere Schellendurchmesser vorteilhaft ist, erstrecken sich die Einbuchtungen nur über einen Teil der Breite des Clipelements und sind dabei insbesondere mittig angeordnet.

Bevorzugterweise ist dabei im Boden des Rastabschnitts eine in Richtung Endabschnitt vorstehende Einprägung ausgebildet. Diese Einprägung drückt dann bei montiertem Clipelement auf die Außenseite des Schellenbandes. In Umfangsrichtung sind so höhere Kräfte zwischen Clipelement und Schellenband übertragbar.

Beginnend vom Rastabschnitt kann im Blechelement ein Befestigungsabschnitt mit einem Klammerteil ausgebildet sein, mit dem das zweite Clipelement am Schlauchende befestigbar ist. Der Befestigungsabschnitt mit dem Klammerteil bildet dabei ein erstes Ende des Blechelementes, wobei der Endabschnitt zur haltenden Anordnung des Clipelementes zwischen dem Schellenband und der Außenoberfläche des Schlauches ein zweites Ende des Blechelementes bildet. Zwischen diesen beiden Enden ist das Blechelement insbesondere mit einer konstanten Breite durchgehend ausgebildet. Dabei kann mit weiterem Vorteil im Übergang zwischen dem Rastabschnitt und dem Befestigungsabschnitt eine Versteifungssicke in das Blechelement eingebracht sein. Mit der Versteifungssicke wird eine unerwünschte plastische Deformation des Clipelementes weitestgehend vermieden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht einer Schlauchschelle mit einem ersten Clipelement und mit einem gegenüberliegenden zweiten Clipelement,
- Figur 2: die Schlauchschelle gemäß Figur 1 in Anordnung an einem Schlauch und
- Figur 3: eine Detailansicht des zweiten Clipelementes.

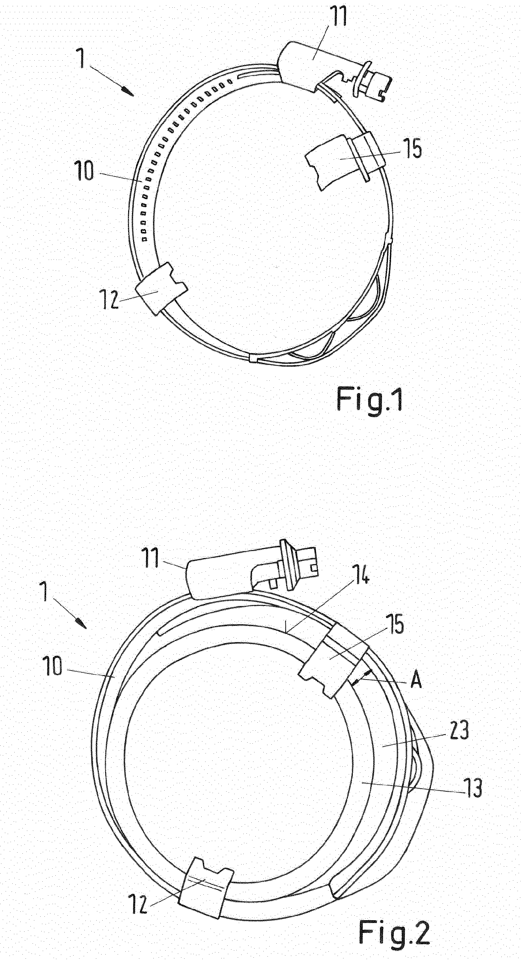

Figur 1 zeigt eine Schlauchschelle 1 mit einem Schellenband 10 und einer Spanneinrichtung 11 zum Spannen des Schellenbandes 10. Durch Aktivieren der Spanneinrichtung 11 wird ein freies Ende des Schellenbandes 10 in die Spanneinrichtung 11 hineingezogen, sodass sich der Durchmesser der Schlauchschelle 1 entsprechend verringert. Gezeigt ist ein erstes Clipelement 12 in Anordnung am Schellenband 10. Auf einer etwa diametral gegenüberliegenden Position weist die Schlauchschelle 1 ein zweites Clipelement 15 auf, das ebenfalls am Schellenband 10 angeordnet ist. Zumindest das zweite Clipelement 15 ist dabei nicht unlösbar am Schellenband 10 aufgenommen, sondern am zweiten Clipelement 10 lediglich rastend gehalten. Das erste Clipelement 12 kann fest mit dem Schellenband 10 verbunden sein, wobei es alternativ ebenfalls lösbar mit dem Schellenband 10 verbunden sein könnte. Insbesondere können alle Clipelemente gleich aufgebaut sein.

Figur 2 zeigt die Schlauchschelle 1 in Anordnung an einem Schlauch 13. Das erste Clipelement 12 und das zweite Clipelement 15 sitzen auf einem Schlauchende 14 auf und sind mit diesem vercrimpt. Das erste Clipelement 12 ist dabei so ausgebildet, dass das Schellenband 10 im Bereich des ersten Clipelementes 12 dicht angrenzend beziehungsweise anliegend an der Außenoberfläche des Schlauches 13 verläuft. Das zweite Clipelement 15 ist so ausgebildet, dass das Schellenband 10 mit einem radialen Abstand zur Außenoberfläche des Schlauches 13 verläuft. Durch diese Anordnung wird eine kippsichere Fixierung der Schlauchschelle 1 am Schlauch 13 erreicht. Wird die Spanneinrichtung 11 betätigt, wird das Schellenband 10 aus dem zweiten Clipelement 15 herausgelöst und der Abstand A überwunden, sodass die sichelförmige Öffnung 23 geschlossen wird. Dabei legt sich das Schellenband 10 vollständig an die Außenoberfläche des Schlauches 13 an und kann so eine radial nach innen gerichtete Haltekraft einbringen.

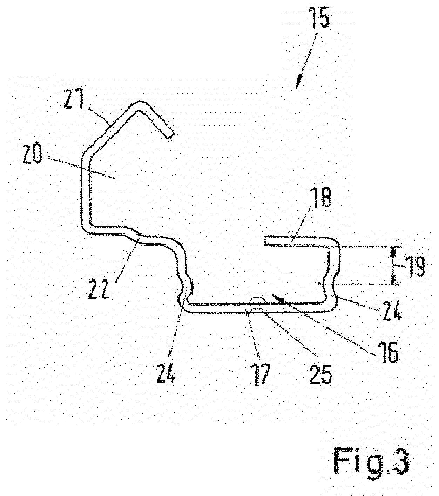

Figur 3 zeigt eine Profilansicht des zweiten Clipelementes 15, welches aus einem durchgehenden, streifenförmigen Blechelement 17 gebildet ist. Das Clipelement 15 ist dabei von der Seite gezeigt. Um das zweite Clipelement 15 am Schlauchende 14 zu vercrimpen, ist das Clipelement 15 mit einem Klammerteil 21 in einem Befestigungsabschnitt 20 versehen. Mit einer entsprechenden Crimpvorrichtung kann das Blechelement 17 im Bereich des Klammerteils 21 derart plastisch verformt werden, dass sich der Befestigungsabschnitt 20 um ein offenes Schlauchende 14 des Schlauches 13 herum verkrallt.

Im Übergang vom Befestigungsabschnitt 20 in einen Rastabschnitt 16 weist das Blechelement 17 eine Versteifungssicke 22 auf, durch die erreicht wird, dass die plastische Verformung des Befestigungsabschnittes 20 sich nicht in den Rastabschnitt 16 fortsetzt. Der Rastabschnitt 16 dient dazu, das Schellenband 10 mit einer lösbaren Kraft zu halten, wofür die Endbereiche des Rastabschnittes 16 Einbuchtungen 24 aufweisen.

An die in der Bildebene rechts ausgebildete Einbuchtung 24 schließt sich an den Rastabschnitt 16 ein Abstandsabschnitt 19 an. An den Abstandsabschnitt 19 schließt sich dann der Endabschnitt 18 an. Der Rastabschnitt 16, der Endabschnitt 18 und der Abstandsabschnitt 19 bilden dabei eine U-Form, wobei der Abstandsabschnitt 19 sich zwischen zwei Schenkeln der U-Form erstreckt, die sich senkrecht zum Abstandabschnitt 19 erstrecken und durch den Rastabschnitt 16 und den Endabschnitt 18 gebildet sind. In Folge dessen erstreckt sich der Endabschnitt 18 mit einer Überdeckung hinter dem Rastabschnitt 16 entlang.

Der Rastabschnitt 16 wird dabei durch zwei Einbuchtungen 24 begrenzt. Diese Einbuchtungen 24 erstrecken sich dabei insbesondere nicht über die gesamte Breite des Clipelements, sondern nur über einen Teil, wobei sie insbesondere mittig ausgebildet sind. Die Einbuchtung führen damit zum einem zu einer Versteifung des Clipelements, zum anderen kann auch bei kleineren Schellendurchmessern ein sicherer Halt erreicht werden.

Ränder des Schellenbandes reichen bei montiertem Clipelement unter die Einbuchtungen 24, so dass das Schellenband zwischen den Einbuchtungen und einem Boden des Rastabschnitts 16 insbesondere unter Vorspannung gehalten wird. Beim Spannen der Schlauchschelle rutschen die Ränder des Schellenbandes an den Einbuchtungen 24 vorbei und das Schellenband gelangt aus der Verrastung mit dem Rastabschnitt 16.

Um eine höhere Reibung zwischen dem Schellenband und dem Clipelement 15 zu erzielen, kann eine Einprägung 25 im Boden des Rastabschnitts ausgebildet sein. Diese drückt bei montiertem Clipelement auf eine Außenseite des Schellenbandes. Das Clipelement wird so auch in Umfangsrichtung sicher am Schellenband fixiert.

Gelangt das Schellenband 10 aus der Verrastung des Rastabschnittes 16, so legt sich das Schellenband 10 an die Außenoberfläche des Schlauches 13 an. Dabei verklemmt es den Endabschnitt 18 zwischen dem Schellenband 10 und dem Schlauch 13. Folglich wird das zweite Clipelement 15 bei einer festgezogenen Schlauchschelle 1 zwischen dem Schellenband 10 und dem Schlauch 13 fixiert, wobei diese Fixierung zusätzlich zur Vercrimpung des Befestigungsabschnittes 20 am Schlauchende 14 erzeugt wird.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: Schlauchschelle
- 10: Schellenband
- 11: Spanneinrichtung
- 12: erstes Clipelement
- 13: Schlauch
- 14: Schlauchende
- 15: zweites Clipelement
- 16: Rastabschnitt
- 17: Blechelement
- 18: Endabschnitt
- 19: Abstandsabschnitt
- 20: Befestigungsabschnitt
- 21: Klammerteil
- 22: Versteifungssicke
- 23: sichelförmige Öffnung
- 24: Einbuchtung
- 25: Einprägung
- A: Abstand

## Patentansprüche

1. Schlauchschelle (1) mit einem Schellenband (10) und einer Spanneinrichtung (11) zum Spannen des Schellenbandes (10), wobei ein erstes Clipelement (12) am Schellenband (10) angeordnet ist, mit dem die Schlauchschelle (1) zur Vorfixierung an einem Schlauch (13) in einem axial bestimmten Abstand zu einem Schlauchende (14) fixierbar ist, wobei ein zweites Clipelement (15) am Schellenband (10) angeordnet ist, wobei das zweite Clipelement (15) eingerichtet ist, das Schellenband (10) zur Vorfixierung in einem radialen Abstand (A) zur Außenoberfläche des Schlauches (13) zu positionieren, **dadurch gekennzeichnet, dass** das zweite Clipelement (15) einen Rastabschnitt (16) aufweist, in den das Schellenband (10) vor dem Spannen der Spanneinrichtung (11) eingerastet ist und aus dem das Schellenband (10) bei einem Spannen der Spanneinrichtung (11) herauslösbar ist, wobei das zweite Clipelement (15) aus einem einteiligen und mehrfach gebogenen Blechelement (17) gebildet ist, wobei das Blechelement (17) einen Endabschnitt (18) aufweist, der so ausgebildet ist, dass dieser nach dem Spannen der Spanneinrichtung (11) zwischen Schellenband (10) und Schlauch (13) gehalten wird.

2. Schlauchschelle (1) nach Anspruch 1, **dadurch gekennzeichnet, dass** das zweite Clipelement (15) auf dem Schellenband (10) dem ersten Clipelement (12) etwa diametral gegenüberliegend angeordnet ist.

3. Schlauchschelle (1) nach Anspruch 1 oder 2, **dadurch gekennzeichnet, dass** das erste Clipelement (12) so ausgebildet ist, dass das Schellenband (10) im Bereich des ersten Clipelementes (12) dicht angrenzend oder anliegend an der Außenoberfläche des Schlauches (13) verläuft.

4. Schlauchschelle (1) nach einem der vorgenannten Ansprüche, **dadurch gekennzeichnet, dass** zwischen dem Rastabschnitt (16) und dem Endabschnitt (18) ein Abstandsabschnitt (19) ausgebildet ist.

5. Schlauchschelle (1) nach Anspruch 4, **dadurch gekennzeichnet, dass** der Rastabschnitt (16), der Endabschnitt (18) und der Abstandsabschnitt (19) einen U-förmigen Teil des Blechelementes (17) bilden, wobei der Rastabschnitt (16) und der Endabschnitt (18) Schenkel der U-Form bilden und etwa parallel zueinander verlaufen, wobei der Abstandsabschnitt (19) einen Grundabschnitt der U-Form bildet und senkrecht zum Rastabschnitt (16) und zum Endabschnitt (18) verläuft.

6. Schlauchschelle (1) nach Anspruch 5, **dadurch gekennzeichnet, dass** der Rastabschnitt (16) von insbesondere zwei Einbuchtungen (24) begrenzt wird, wobei Ränder des Schellenbands (10) zwischen den Einbuchtungen und einem Boden des Rastabschnitts (16) rastend aufnehmbar sind.

7. Schlauchschelle (1) nach Anspruch 6, **dadurch gekennzeichnet, dass** im Boden des Rastabschnitts (16) eine in Richtung Endabschnitt (18) vorstehende Einprägung (25) ausgebildet ist.

8. Schlauchschelle (1) nach einem der Ansprüche 1 bis 7, **dadurch gekennzeichnet, dass** sich beginnend vom Rastabschnitt (16) ein Befestigungsabschnitt (20) mit einem Klammerteil (21) fortsetzt, mit dem das zweite Clipelement (15) an das Schlauchende (14) befestigbar ist.

9. Schlauchschelle (1) nach Anspruch 8, **dadurch gekennzeichnet, dass** im Übergang zwischen dem Rastabschnitt (16) und dem Befestigungsabschnitt (20) eine Versteifungssicke (22) in das Blechelement (17) eingebracht ist.

## Claims

1. A hose clamp (1) having a clamping band (10) and a tightening device (11) for tightening the clamping band (10), wherein a first clip element (12) is arranged on the clamping band (10), wherein the hose clip (1) is fixable for pre-fixing to a hose (13) at an axially determined distance from a hose end (14) by the first clip element, wherein a second clip element (15) is arranged on the clamping band (10), wherein the second clip element (15) is configured to position the clamping band (10) for pre-fixing at a radial distance (A) from the outside surface of the hose (13), **characterized in that** the second clip element (15) comprises a latching portion (16) in which the clamping band (10) is latched prior to the tightening of the tightening device (11) and from which the clamping band (10) is releasable when the tightening band (11) is tightened, wherein the second clip element (15) is formed from a one-part and multiply-curved sheet metal element (17), wherein the sheet metal element (17) comprises an end portion (18) which is realized such that, once the tightening device (11) has been tightened, it is held between clamping band (10) and hose (13).

2. The hose clamp (1) as claimed in claim 1, **characterized in that** the second clip element (15) is arranged on the clamping band (10) for instance diametrically opposite the first clip element (12).

3. The hose clamp (1) as claimed in claim 1 or 2, **characterized in that** the first clip element (12) is realized such that the clamping band (10) extends tightly bordering on or abutting against the outside surface of the hose (13) in the region of the first clip element (12).

4. The hose clamp (1) as claimed in one of the preceding claims, **characterized in that** a spacer portion (19) is realized between the latching portion (16) and the end portion (18).

5. The hose clamp (1) as claimed in claim 4, **characterized in that** the latching portion (16), the end portion (18) and the spacer portion (19) form an U-shaped part of the sheet metal element (17), wherein the latching portion (16) and the end portion (18) form legs of the U-shape and extend approximately parallel to one another, wherein the spacer portion (19) forms a base portion of the U-shape and extends perpendicularly to the latching portion (16) and to the end portion (18).

6. The hose clamp (1) as claimed in claim 5, **characterized in that** the latching portion (16) is defined in particular by two indentations (24), wherein edges of the clamping band (10) are receivable in a latching manner between the indentations and a base of the latching portion (16).

7. The hose clamp (1) as claimed in claim 6, **characterized in that** an embossing (25) which protrudes in the direction of the end portion (18) is realized in the base of the latching portion (16).

8. The hose clamp (1) as claimed in one of claims 1 to 7, **characterized in that** beginning from the latching portion (16), a fastening portion (20) is continued with a clamp part (21), by way of which the second clip element (15) is fastenable to the hose end (14).

9. The hose clamp (1) as claimed in claim 8, **characterized in that** a reinforcement bead (22) is inserted into the sheet metal element (17) at the transition between the latching portion (16) and the fastening portion (20) .

## Revendications

1. Collier de serrage (1) avec une bande de serrage (10) et un dispositif de tension (11) pour tendre la bande de serrage (10), un premier élément de clip (12) étant disposé sur la bande de serrage (10), avec lequel le collier de serrage (1) peut être fixé pour une préfixation sur un tuyau (13) à une distance déterminée axialement d'une extrémité de tuyau (14), dans lequel un second élément de clip (15) est agencé sur la bande de serrage (10), dans lequel le second élément de clip (15) est agencé pour positionner la bande de serrage (10) pour une préfixation à une distance radiale (A) de la surface extérieure du tuyau (13), **caractérisé en ce que** le second élément de clip (15) a une section de verrouillage (16). dans lequel la bande de serrage (10) est engagée avant la mise en tension du dispositif de tension (11) et duquel la bande de serrage (10) peut être libérée lorsque le dispositif de tension (11) est mis en tension, le deuxième élément de clip (15) étant formé d'un élément en tôle (17) d'une seule pièce et plié plusieurs fois, l'élément en tôle (17) présentant une partie d'extrémité (18) qui est conçue de telle sorte que celle-ci est maintenue entre la bande de serrage (10) et le tuyau (13) après la mise en tension du dispositif de tension (11).

2. Collier de serrage (1) selon la revendication 1, **caractérisé en ce que** le deuxième élément de clip (15) est disposé sur la bande de serrage (10) à peu près diamétralement opposé au premier élément de clip (12).

3. Collier de serrage (1) selon la revendication 1 ou 2, **caractérisé en ce que** le premier élément de clip (12) est conçu de telle sorte que la bande de serrage (10) s'étend dans la région du premier élément de clip (12) à proximité immédiate ou en butée contre la surface extérieure du tuyau (13).

4. Collier de serrage (1) selon l'une des revendications précédentes, **caractérisé en ce qu'**une section d'écartement (19) est formée entre la section de verrouillage (16) et la partie d'extrémité (18).

5. Collier de serrage (1) selon la revendication 4, **caractérisé en ce que** la section de verrouillage (16), la partie d'extrémité (18) et la section d'écartement (19) forment une partie en forme de U de l'élément en tôle (17), la section de verrouillage (16) et la partie d'extrémité (18) formant des branches de la forme en U et s'étendant approximativement parallèlement l'une à l'autre, la section d'écartement (19) formant une section de base de la forme en U et s'étendant perpendiculairement à la section de verrouillage (16) et à la partie d'extrémité (18).

6. Collier de serrage (1) selon la revendication 5, **caractérisé en ce que** la section de verrouillage (16) est délimitée par, en particulier, deux encoches (24), les bords de la bande de serrage (10) pouvant être reçus par encliquetage entre les encoches et un fond de la section de verrouillage (16).

7. Collier de serrage (1) selon la revendication 6, **caractérisé en ce qu'**une indentation (25) faisant saillie dans la direction de la partie d'extrémité (18) est formée dans le fond de la section de verrouillage (16).

8. Collier de serrage (1) selon l'une quelconque des revendications 1 à 7, **caractérisé en ce que**, en partant de la section de verrouillage (16), une section de fixation (20) se poursuit par une partie de clip (21) au moyen de laquelle le deuxième élément de clip (15) peut être fixé à l'extrémité du tuyau (14).

9. Collier de serrage (1) selon la revendication 8, **caractérisé en ce qu'**un bourrelet de renforcement (22) est introduit dans l'élément en tôle (17) dans la transition entre la section de verrouillage (16) et la section de fixation (20).
